# EUROPÄISCHE PATENTSCHRIFT

(11) **EP 2 592 394 B1**
(45) Veröffentlichungstag und Bekanntmachung des Hinweises auf die Patenterteilung: **18.10.2017**
(21) Anmeldenummer: 12191720.7
(22) Anmeldetag: 08.11.2012
(51) Int. Cl.: G01F 1/684, G01F 15/18

(54) **Komponente einer Frischluftanlage einer Brennkraftmaschine mit einer Luftparametermesseinrichtung und Verwendung der Luftparametermesseinrichtung**
Component of a fresh air system for an internal combustion engine with an air parameter sensor and use of the air parameter sensor.
Composant d'un système d'air pour un moteur à combustion interne avec un capteur de paramètre d'air et utilisation du capteur.

(30) Priorität: 10.11.2011 DE 102011086088
(43) Veröffentlichungstag der Anmeldung: 15.05.2013
(73) Patentinhaber: MAHLE International GmbH, 70376 Stuttgart (DE)
(72) Erfinder: KAISER, Sven Alexander, 71364 Winnenden (DE)
(74) Vertreter: BRP Renaud & Partner mbB Rechtsanwälte Patentanwälte Steuerberater

(56) Entgegenhaltungen:
- DE-A1- 3 521 410
- DE-A1-102007 055 193
- DE-A1-102009 053 433
- US-A- 3 559 483

## Beschreibung

Die vorliegende Erfindung betrifft eine Luftparametermesseinrichtung für eine Frischluftanlage einer Brennkraftmaschine, insbesondere eines Kraftfahrzeugs, mit den Merkmalen des Oberbegriffs des Anspruchs 1.

Zur ordnungsgemäßen Steuerung einer Brennkraftmaschine ist die Kenntnis der aktuell zugeführten Luftmasse von entscheidender Bedeutung. Zum Messen der Luftmasse kommen Luftmassenmesseinrichtungen zum Einsatz. Grundsätzlich können jedoch auch andere Parameter, wie zum Beispiel Druck und Temperatur der der Brennkraftmaschine zugeführten Frischluft von Interesse sein. Dementsprechend betrifft die vorliegende Erfindung im Allgemeinen eine Luftparametermesseinrichtung und im Speziellen eine Luftmassenmesseinrichtung.

Aus der DE 198 52 015 B4 ist eine Luftmassenmesseinrichtung bekannt, die einen in Umfangsrichtung geschlossenen Kanal zur Führung einer Frischluftströmung sowie eine Sensorik zum Messen der Luftmasse der Frischluftströmung im Kanal umfasst. Bei der bekannten Luftmassenmesseinrichtung ist die Sensorik an den Kanal angebaut und der Kanal wird als Ganzes axial in einen Strang der Frischluftanlage eingebaut.

Aus der DE 198 48 109 B4 ist eine weitere Luftmassenmesseinrichtung bekannt, bei welcher die Sensorik mit dem Kanal integriert ausgebildet ist, wobei die so gebildete integrale Einheit axial in einen Strang der Frischluftanlage, zum Beispiel zwischen einem Luftfiltergehäuse und einem Frischluftrohr, eingebaut wird.

Aus der DE 197 38 337 C2 ist eine weitere Luftmassenmesseinrichtung bekannt, bei der die Sensorik an den Kanal angebaut ist und bei der der Kanal axial in einen Strang der Frischluftanlage eingebaut ist, auch hier vorzugsweise zwischen einem Luftfiltergehäuse und einem Frischluftrohr.

Aus der DE 10 2009 053 433 ist ein Saugrohrabschnitt und eine Komponente einer Frischluftanlage bekannt, die ein rohrförmiges Gehäuse und eine Luftparametermesseinrichtung, nämlich einen Luftmassenmesser, aufweist. Das rohrförmige Gehäuse definiert dabei einen in Umfangsrichtung geschlossenen Kanal zur Führung einer Frischluftströmung. Die Luftparametermesseinrichtung umfasst eine Sensorik zum Messen wenigstens eines Parameters der Frischluftströmung im Kanal, nämlich der Luftmasse. Dabei wird die Sensorik durch eine seitliche Öffnung des Gehäuses in das Gehäuse eingesetzt.

Weitere Luftmassenmesseinrichtungen dieser Art sind beispielsweise aus der DE 102 20 430 B4 und der DE 20 2006 004 927 U1 bekannt. Beim axialen Einbauen des die Sensorik aufweisenden Kanals in den Strang einer Frischluftanlage ergeben sich stets zwei axial voneinander beabstandete, beiderseits der Sensorik angeordnete Verbindungsstellen und Dichtstellen. Dabei können sich Herstellungstoleranzen der hierbei miteinander zu verbindenden drei Komponenten aufaddieren, wodurch es zu abweichenden Messergebnissen der Luftmassenmesseinrichtung kommen kann, wenn die Einheit aus Kanal und Sensorik außerhalb des Strangs der Frischluftanlage in einer Kalibrierstation justiert wird, wobei die Kalibrierstation eine ideale Einbaulage bzw. eine Referenz-Einbaulage der Einheit aus Kanal und Sensorik im Strang der Frischluftanlage repräsentiert.
Die vorliegende Erfindung beschäftigt sich mit dem Problem, für eine Luftparametermesseinrichtung der eingangs genannten Art eine verbesserte Ausführungsform aufzuzeigen, die sich insbesondere durch eine verbesserte Messqualität auszeichnet.
Bei der vorliegenden Erfindung wird dieses Problem insbesondere durch die Gegenstände der unabhängigen Ansprüche gelöst. Vorteilhafte Ausführungsformen sind Gegenstand der abhängigen Ansprüche.

Die vorliegende Erfindung betrifft eine Komponente einer Frischluftanlage einer Brennkraftmaschine, insbesondere eines Kraftfahrzeugs, wobei die Komponente ein Gehäuse besitzt und mit einer Luftparametermesseinrichtung ausgestattet ist. Das Gehäuseteil der Messeinrichtung bildet dabei einen integralen Bestandteil des Gehäuses der Komponente.

Die Erfindung beruht auf dem allgemeinen Gedanken, die Luftparametermesseinrichtung mit einem Gehäuseteil auszustatten und den Kanal in wenigstens zwei Längsabschnitte zu unterteilen, wobei ein solcher Längsabschnitt des Kanals an einem Einsatzteil der Luftparametermesseinrichtung ausgebildet ist, während wenigstens ein weiterer Längsabschnitt des Kanals am Gehäuseteil ausgebildet ist. Ferner sind das Einsatzteil und das Gehäuseteil so aufeinander abgestimmt, dass das Einsatzteil bezüglich einer Strömungsrichtung der Luftströmung im Kanal radial in das Gehäuseteil eingesetzt ist. Des Weiteren ist die Sensorik am Einsatzteil ausgebildet, so dass letztlich eine Einheit aus Einsatzteil und Sensorik nach Art eines Einschubs radial in das Gehäuseteil einsetzbar ist, derart, dass sich die einzelnen Kanalabschnitte des Einsatzteils und des Gehäuseteils zum Kanal komplettieren. Durch diese Bauweise lässt sich im Vergleich zu einer axialen Montage wenigstens eine Verbindungsstelle und somit wenigstens eine Dichtungsstelle einsparen. Die Toleranzkette verringert sich, wodurch letztlich genauere Messergebnisse mit Hilfe der kalibrierten Messeinrichtung realisierbar sind. Des Weiteren vereinfacht die radiale Montierbarkeit und Demontierbarkeit der Einheit aus Einsatzteil und Sensorik Wartungs- und Reparaturarbeiten, da der Frischluftstrang nicht zerlegt werden muss, um die Messeinrichtung ein- bzw. ausbauen zu können.

Gemäß einem Beispiel kann der im Einsatzteil ausgebildete Längsabschnitt des Kanals, also der Kanalabschnitt des Einsatzteils in der Umfangsrichtung den ganzen von der Frischluftströmung durchströmbaren Querschnitt des Kanals umfassen bzw. umschließen. Entsprechendes gilt vorzugsweise auch für den im Gehäuseteil ausgebildeten Längsabschnitt des Kanals, also für den Kanalabschnitt des Gehäuseteils, so dass auch dieser den ganzen von der Frischluftströmung durchströmbaren Querschnitt in der Umfangsrichtung einschließt.

Gemäß einem Beispiel ist das Einsatzteil zwischen zwei axial voneinander beabstandeten Längsenden des Gehäuseteils eingesetzt, wobei das Einsatzteil zu beiden Längsenden des Gehäuseteils axial beabstandet ist. Hierdurch wird sichergestellt, dass die Schnittstelle zwischen dem Einsatzteil und der Frischluftanlage ausschließlich am Gehäuseteil ausgebildet ist. Somit lassen sich Herstellungstoleranzen reduzieren und insbesondere kritische Toleranzketten vermeiden.

Entsprechend einer vorteilhaften Ausführungsform kann das Gehäuseteil eine Aufnahme mit einer radialen Öffnung besitzen, wobei das Einsatzteil durch diese Öffnung in die Aufnahme radial eingesetzt ist. Durch die Bereitstellung einer Aufnahme im Gehäuseteil kann das Einsatzteil im eingesetzten Zustand abgesehen vom Bereich der Öffnung und abgesehen vom Kanal durch das Gehäuseteil gekapselt sein, wodurch insbesondere eine Druckfestigkeit weitgehend auf das Gehäuseteil verlegt werden kann, so dass der Kanalabschnitt des Einsatzteils beispielsweise mit einer vergleichsweise dünnen Wandstärke realisiert werden kann. Des Weiteren sorgt die Ausbildung einer Aufnahme im Gehäuseteil dafür, dass die an das Einsatzteil anschließenden Bereiche des Gehäuseteils hinsichtlich ihrer Lage relativ zueinander zuverlässig positioniert sind.

Entsprechend einer Weiterbildung kann das Einsatzteil die Öffnung verschließen. Mit anderen Worten, das Einsatzteil ist so ausgestaltet, dass es beim Einsetzen in die Öffnung dieselbe dicht verschließt. Somit kann auf einen zusätzlichen Deckel verzichtet werden. Darüber hinaus ist es grundsätzlich möglich, eine Verbindung zwischen Einsatzteil und Gehäuseteil so zu konzipieren, dass durch das Fixieren des Einsatzteils am Gehäuseteil gleichzeitig die Öffnung dicht verschlossen wird.

Entsprechend einer anderen vorteilhaften Weiterbildung kann eine Kragendichtung vorgesehen sein, die zwischen einem die Öffnung einfassenden Kragen des Gehäuses und einem sich entlang des Kragens erstreckenden Randes des Einsatzteils angeordnet ist. Auf diese Weise lässt sich eine zuverlässige Abdichtung zwischen Einsatzteil und Gehäuseteil im Bereich der Öffnung realisieren.

Entsprechend einer anderen vorteilhaften Weiterbildung kann eine Wanddichtung vorgesehen sein, die zwischen einer Innenseite einer die Aufnahme radial begrenzenden Gehäusewand und einer Außenseite einer den Kanalabschnitt des Einsatzteils radial begrenzenden Bauteilwand angeordnet ist. Mit Hilfe einer derartigen Wanddichtung kann eine Bypassströmung im Gehäuseteil vermieden werden, die einen Radialspalt zwischen Einsatzteil und Gehäuseteil unter Umgehung des durchströmbaren Querschnitts des Einsatzteils nutzt. Hierdurch ist sichergestellt, dass die gesamte Luftströmung zwangsläufig den durchströmbaren Querschnitt des Kanalabschnitts des Einsatzteils durchströmt, in dem auch die Sensorik zur Messung der Luftströmung angeordnet ist.

Die jeweilige Dichtung kann an das Einsatzteil angespritzt sein. Sofern das Einsatzteil ein Kunststoffteil ist, lässt sich die jeweilige Dichtung beispielsweise in 2K-Technik am Einsatzteil anspritzen. Zweckmäßig können die Dichtungen ineinander übergehen, so dass letztlich eine einheitliche Dichtungsanordnung vorgesehen ist, die in einem Bereich die Kragendichtung bildet und die in einem anderen Bereich die Wanddichtung bildet. Auch diese Dichtungsanordnung kann an das Einsatzteil angespritzt sein. Alternativ kann die Wanddichtung als LabyrinthDichtung ausgebildet sein. Hierbei überlappen sich Geometrien der Innenseite und der Außenseite in radialer und/oder axialer Richtung.

Bei einer anderen vorteilhaften Ausführungsform kann die Aufnahme einen U-förmigen Innenquerschnitt aufweisen, wobei das Einsatzteil einen dazu komplementären Außenquerschnitt aufweist. Hierdurch ergibt sich für das Einbringen des Einsatzteils eine seitliche Führung, so dass das Einsatzteil wie eine Schublade im Gehäuseteil geführt ist, was die ordnungsgemäße Montage des Einsatzteils am Gehäuseteil vereinfacht. Hierbei kann die seitliche Führung beispielsweise durch die Wanddichtung gebildet werden, die in einer entsprechenden Geometrie des benachbarten Bauteils verläuft.

Gemäß einer anderen zweckmäßigen Ausführungsform können ein die Öffnung einfassender Kragen des Gehäuseteils und ein sich entlang des Kragens erstreckender Rand des Einsatzteils in einer Ebene liegen, was die Realisierung einer effizienten Abdichtung vereinfacht. Diese Ebene kann dabei parallel zu einer Längsrichtung des Kanalabschnitts des Einsatzteils verlaufen. Ferner kann eine Radialrichtung, die der Einsatzrichtung des Einsatzteils entspricht, senkrecht zur Ebene orientiert sein. Auch diese Maßnahmen vereinfachen die Realisierung einer effizienten Abdichtung und einer genauen Ausrichtung des Einsatzteils relativ zum Gehäuseteil.

Gemäß einer anderen vorteilhaften Ausführungsform kann die Sensorik an einem Sensorträger angeordnet sein, wobei das Einsatzteil eine radiale Durchgangsöffnung aufweist, durch die der Sensorträger in den Kanalabschnitt des Einsatzteils hineinragt. Der Sensorträger verschließt die Durchgangsöffnung dabei dicht. Beispielsweise kann der Sensorträger mit dem Einsatzteil verschweißt oder verklebt sein. Zweckmäßig besitzt der Sensorträger einen an der Außenseite des Einsatzteils sowie des Gehäuseteils verbleibenden elektrischen Anschluss zur elektrischen Kontaktierung der Sensorik.

Bei einer anderen vorteilhaften Ausführungsform kann das Einsatzteil ein Strömungsleitgitter aufweisen, das im Kanalabschnitt des Einsatzteils angeordnet ist. Mit Hilfe eines derartigen Strömungsleitgitters lässt sich die Frischluftströmung im Bereich der Sensorik homogenisieren, um so die Messergebnisse zu verbessern. Ein derartiges Strömungsleitgitter erstreckt sich dabei zweckmäßig quer zur Längsrichtung des Kanalabschnitts des Einsatzteils. Ferner erstreckt sich das Strömungsleitgitter zweckmäßig über den gesamten Querschnitt des Kanalabschnitts. Das Strömungsleitgitter ist dabei bevorzugt stromauf der Sensorik im Kanalabschnitt angeordnet. Grundsätzlich ist jedoch auch eine stromab liegende Anordnung denkbar. Besonders vorteilhaft ist eine Weiterbildung bei welcher das Strömungsleitgitter am Einsatzteil integral ausgeformt ist. Beispielsweise kann das Strömungsleitgitter beim Spritzformen des Einsatzteils integral am Einsatzteil ausgeformt werden.
Das Strömungsleitgitter kann einen Zentralbereich und einen Ringbereich umfassen, wobei der Ringbereich den Zentralbereich umschließt und den Ringbereich mit einer Bauteilwand des Einsatzteils verbindet. Innerhalb des Zentralbereichs kann das Strömungsleitgitter eine Gitterstruktur mit senkrecht aufeinanderstehenden Gitterstäben aufweisen. Im Ringbereich können dagegen Gitterstäbe angeordnet sein, die gegenüber der Radialrichtung in der Umfangsrichtung geneigt sind. Zweckmäßig sind dabei die Gitterstäbe des Ringbereichs gleichförmig geneigt. Durch diese Bauweise führt eine thermisch bedingte Ausdehnung des Strömungsleitgitters zu einer Rotation des Kernbereichs gegenüber der Bauteilwand, ohne dass sich unzulässige Spannungen aufbauen können.
Bei einer anderen vorteilhaften Ausführungsform kann das Gehäuseteil zwei axial zueinander fluchtende Längsabschnitte des Kanals aufweisen, wobei der Kanalabschnitt des Einsatzteils axial zwischen den beiden Kanalabschnitten des Gehäuseteils und dazu axial fluchtend angeordnet ist. Durch diese Bauweise lässt sich eine besonders günstige Durchströmung des Kanals realisieren, die sich in besonderer Weise für die Erfassung des jeweiligen Luftparameters eignet. Vorteilhaft ist ferner eine Ausführungsform, bei welcher das Einsatzteil lösbar am Gehäuseteil befestigt ist. Rein exemplarisch kann hierfür eine Verschraubung vorgesehen sein. Eine lösbare Festlegung des Einsatzteils am Gehäuseteil ermöglicht beispielsweise Wartungsarbeiten sowie einen Austausch der Sensorik bzw. der Einheit aus Einsatzteil und Sensorik.
Besonders vorteilhaft handelt es sich bei der Luftparametermesseinrichtung um eine Luftmassenmesseinrichtung.

Insbesondere können das Gehäuse der Komponente und das Gehäuseteil der Messeinrichtung als integrales, monolithisches Spritzformteil aus Kunststoff ausgestaltet sein. Bei besagter Komponente kann es sich beispielsweise um ein Luftfilter handeln, das ein im Gehäuse des Luftfilters stromauf der Messeinrichtung angeordnetes Filterelement aufweist.
Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt einer Komponente einer Frischluftanlage im Bereich einer Luftparametermesseinrichtung,
- Fig. 2: eine isometrische Ansicht der Komponente,
- Fig. 3: eine Axialansicht der Komponente,
- Fig. 4: eine auseinandergezogene Axialansicht der Komponente,
- Fig. 5: eine isometrische Ansicht eines Einsatzteils der Luftparametermesseinrichtung.

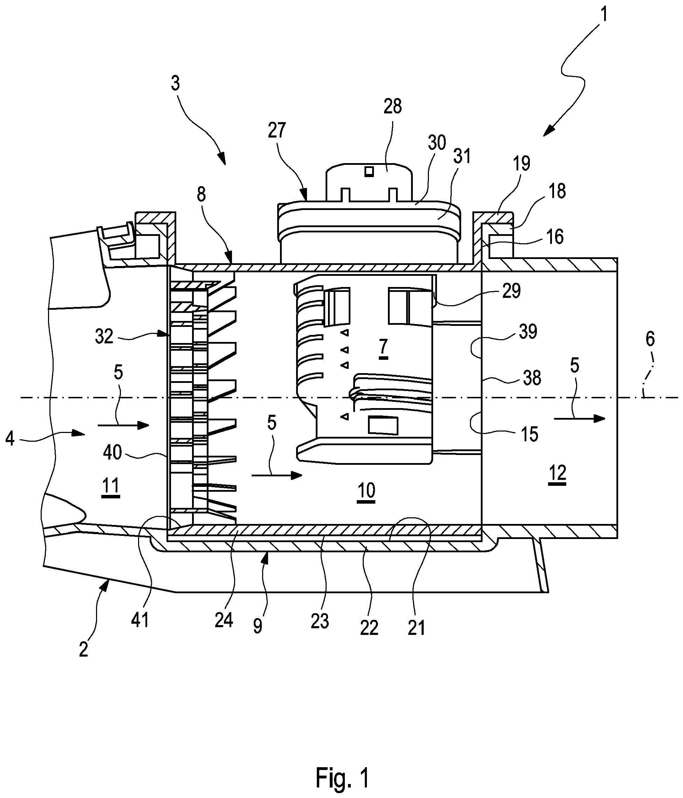

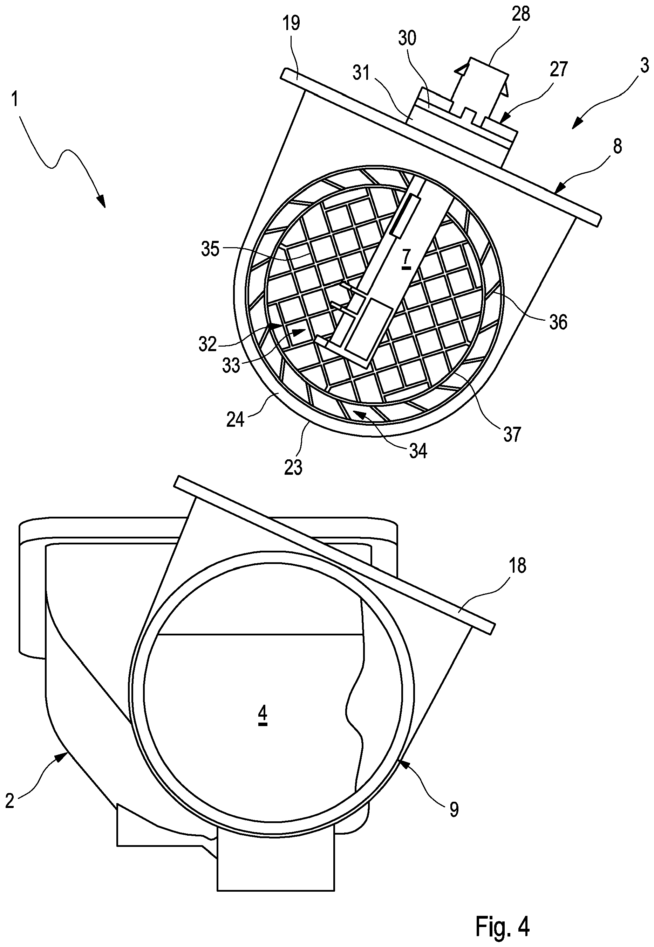

Entsprechend den Figuren 1-4 umfasst eine Komponente 1 einer Frischluftanlage einer Brennkraftmaschine, die insbesondere in einem Kraftfahrzeug angeordnet sein kann, ein Gehäuse 2 und eine Luftparametermesseinrichtung 3. Vorzugsweise handelt es sich bei der Luftparametermesseinrichtung 3 um eine Luftmassenmesseinrichtung, die im Folgenden ebenfalls mit 3 bezeichnet werden kann. Die Messeinrichtung 3 umfasst dabei einen Kanal 4 zum Führen einer in Figur 1 durch Pfeile angedeuteten Frischluftströmung 5. Der Kanal 4 besitzt hierbei eine Längsmittelachse 6, die eine Längsrichtung oder Hauptströmungsrichtung der Frischluftströmung 5 definiert. Der Kanal 4 ist bezüglich seiner Längsachse 6 in der Umfangsrichtung geschlossen. Die Messeinrichtung 3 umfasst des Weiteren eine Sensorik 7 zum Messen wenigstens eines Parameters, vorzugsweise der Luftmasse, der Frischluftströmung 5 im Kanal 4. Die hier vorgestellte Messeinrichtung 3 umfasst ferner ein Einsatzteil 8 und ein Gehäuseteil 9. Des Weiteren ist bei der Messeinrichtung 3 der Kanal 4 in wenigstens zwei Längsabschnitte 10, 11, 12 unterteilt. Ein derartiger Längsabschnitt 10, der im Folgenden als erster Längsabschnitt 10 bezeichnet wird, ist dabei am Einsatzteil 8 ausgebildet. Zumindest ein weiterer Längsabschnitt, hier zwei weitere Längsabschnitte 11, 12, die im Folgenden als zweiter Längsabschnitt 11 bzw. als dritter Längsabschnitt 12 bezeichnet werden, sind hier am Gehäuseteil 9 ausgebildet. Das Einsatzteil 8 bildet bezüglich des Gehäuseteils 9 ein separates Bauteil und ist bezüglich der Längsachse 6 des Kanals 4 radial in das Gehäuseteil 9 eingesetzt. Dabei schließen im montierten Zustand die beiden Kanalabschnitte 11, 12 des Gehäuseteils 9 axial an den ersten Kanalabschnitt 10 des Einsatzteils 8 an. Die Sensorik 7 ist am Einsatzteil 8 angeordnet, so dass die Sensorik 7 im Betrieb der Messeinrichtung 3 den jeweiligen Parameter, also vorzugsweise die Luftmasse, der Frischluftströmung 5 im Kanalabschnitt 10 des Einsatzteils 8 misst.

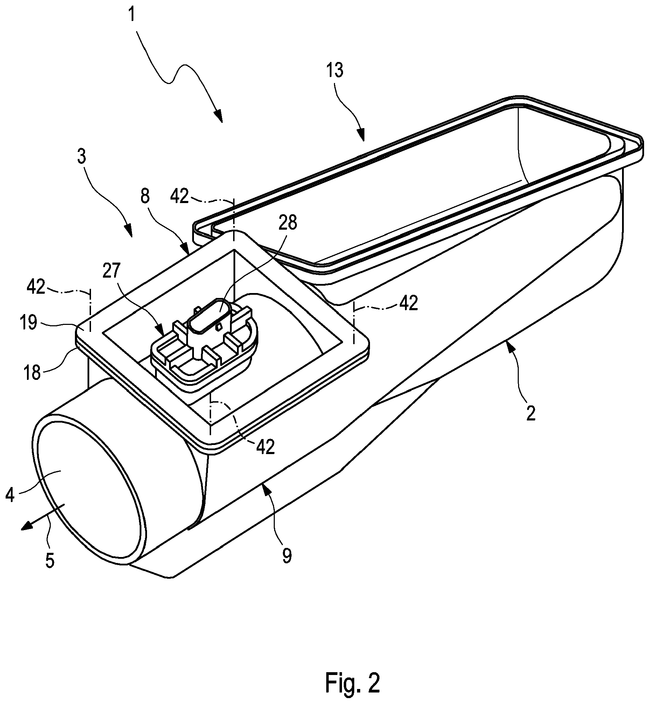

Bei der hier gezeigten Komponente 1 ist das Gehäuseteil 9 der Messeinrichtung 3 in das Gehäuse 2 der Komponente 1 integriert, derart, dass das Gehäuseteil 9 einen integralen Bestandteil des Gehäuses 2 bildet. Zweckmäßig ist das Gehäuse 2 ein einteiliges, monolithisches Spritzgussteil, wobei ein Abschnitt oder Bereich dieses Gehäuses 2 das Gehäuseteil 9 der Messeinrichtung 3 bildet. Im gezeigten Beispiel handelt es sich bei der Komponente 1 um ein Luftfilter, das im Folgenden ebenfalls mit 1 bezeichnet wird. Das Gehäuse 2 des Luftfilters 1 besitzt in einem in Fig. 2 dargestellten Filterbereich 13 einen Aufnahmeraum 14 zur Unterbringung eines hier nicht gezeigten Filterelements, wobei sich dieses Filterelement bezüglich der Luftströmung 5 stromauf der Messeinrichtung 3 befindet.

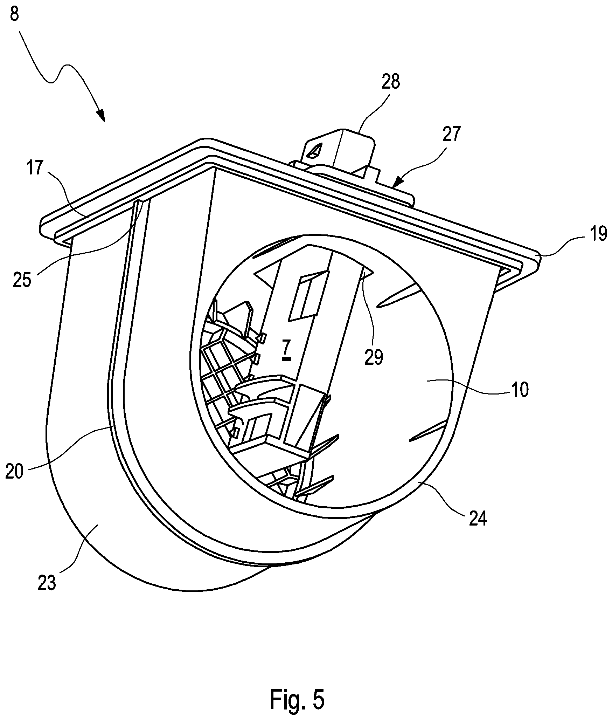

Entsprechend den Figuren 1 bis 4 besitzt das Gehäuseteil 9 eine Aufnahme 15, die ihrerseits eine radiale Öffnung 16 aufweist, durch die das Einsatzteil 8 in die Aufnahme 15 eingesetzt werden kann. Das Einsatzteil 8 ist dabei so konfiguriert, dass es im eingesetzten Zustand die Öffnung 16 verschließt. Gemäß Figur 5 kann an das Einsatzteil 8 eine Kragendichtung 17 angespritzt sein. Im montierten Zustand befindet sich diese Kragendichtung 17 zwischen einem in den Figuren 1-4 erkennbaren Kragen 18 des Gehäuseteils 9, der die Öffnung 16 einfasst, und einem Rand 19 des Einsatzteils 8, der sich im montierten Zustand entlang des Kragens 18 erstreckt. Ferner ist gemäß Figur 5 eine Wanddichtung 20 vorgesehen, die zweckmäßig ebenfalls an das Einsatzteil 8 angespritzt ist. Die Wanddichtung 20 ist dabei zwischen einer in Figur 1 erkennbaren Innenseite 21 einer Gehäusewand 22, welche die Aufnahme 15 radial begrenzt, und einer Außenseite 23 einer Bauteilwand 24 angeordnet, welche den ersten Kanalabschnitt 10 radial begrenzt. Die beiden Dichtungen 17, 20 können bei 25 integral ineinander übergehen und eine integrierte Dichtungsanordnung bilden.

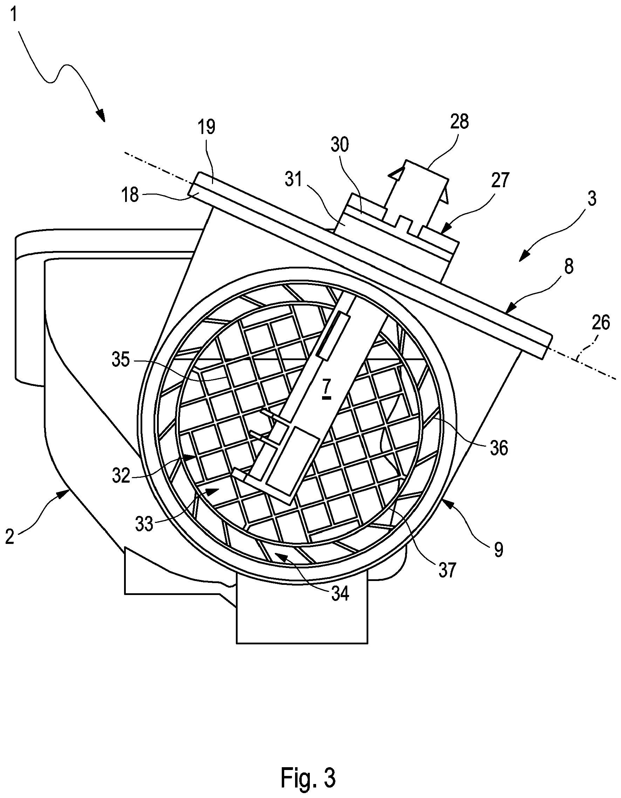

Beim hier gezeigten Beispiel besitzt die Aufnahme 15 senkrecht zur Längsachse 6 einen U-förmigen Innenquerschnitt, während das Einsatzteil 8 einen dazu komplementären Außenquerschnitt aufweist. Hierdurch ergibt sich eine Führung zwischen Einsatzteil 8 und Gehäuseteil 9, welche die Einsteckrichtung bzw. die Radialrichtung definiert. Der Kragen 18 des Gehäuseteils 9 und der Rand 19 des Einsatzteils 8 können in einer in Figur 3 mit unterbrochener Linie angedeuteten Ebene 26 liegen. Diese Ebene 26 verläuft zweckmäßig parallel zur Längsrichtung 6 und steht weitgehend senkrecht auf der Radialrichtung zur Längsachse 6.

Beim hier gezeigten Beispiel ist die Sensorik 7 an einem Sensorträger 27 angeordnet, an dem außerdem ein elektrischer Anschluss 28 zur elektrischen Kontaktierung der Sensorik 7 ausgebildet ist. Das Einsatzteil 8 besitzt eine radiale Durchgangsöffnung 29, durch die der Sensorträger 27 in den Kanalabschnitt 10 des Einsatzteils 8 hineinragt. Dabei verschließt der Sensorträger 27 die Durchgangsöffnung 29 dicht. Zweckmäßig ist dabei ein Flanschabschnitt 30 des Sensorträgers 27 mit einem umlaufenden Kragen 31 des Einsatzteils 8, der die Durchgangsöffnung einfasst, verschweißt oder verklebt. Der Anschluss 28 verbleibt dabei an einer vom Kanal 4 abgewandten Außenseite des Einsatzteils 8 sowie des Gehäuseteils 9.

Bei der gezeigten, bevorzugten Ausführungsform besitzt das Einsatzteil 8 außerdem ein Strömungsleitgitter 32, das im ersten Kanalabschnitt 10 angeordnet ist. Das Strömungsleitgitter 32 erstreckt sich vorzugsweise senkrecht zur Längsrichtung 6 des Kanals 4 über den gesamten durchströmbaren Querschnitt des ersten Kanalabschnitts 10 und ist außerdem im Beispiel stromauf der Sensorik 7 positioniert. Zweckmäßig ist das Strömungsleitgitter integral am Einsatz 8 ausgeformt. Beispielsweise bildet das Einsatzteil 8 mit dem Strömungsleitgitter 32 ein einteiliges, monolithisches Spritzformteil, vorzugsweise aus Kunststoff. Das Strömungsleitgitter 32 setzt sich im gezeigten Beispiel aus einem zentralen Kernbereich 33 und einem den Kernbereich 33 umschließenden Ringbereich 34 zusammen, wobei sich der Kernbereich 33 über den Ringbereich 34 an der Bauteilwand 24 des Einsatzteils 8 abstützt. Erkennbar ist im Kernbereich 33 eine rechteckige bzw. senkrechte Gitterstruktur aus senkrecht aufeinanderstehenden Gitterstäben 35 ausgebildet, während im Ringbereich 34 Gitterstäbe 36 angeordnet sind, die gegenüber einer Radialrichtung in der Umfangsrichtung geneigt sind. Kernbereich 33 und Ringbereich 34 sind dabei über einen Verbindungsring 37 miteinander verbunden, der außen durch die Gitterstäbe 36 des Ringbereichs 34 getragen ist und der innen die Gitterstruktur des Kernbereichs 33 trägt.

Die beiden Kanalabschnitte 11, 12 des Gehäuseteils 9 sind dabei axial fluchtend zueinander am Gehäuseteil 9 angeordnet. Im montierten Zustand ist der Kanalabschnitt 10 des Einsatzteils 8 axial zwischen den beiden Kanalabschnitten 11, 12 des Gehäuseteils 9 angeordnet und zu diesen axial fluchtend ausgerichtet. Dabei ist ein Austrittsende 38 des ersten Kanalabschnitts 10 radial bündig mit einem Eintrittsende 39 des stromab daran anschließenden Kanalabschnitts 12 des Gehäuseteils 9 axial stoßend angeordnet. Im Unterschied dazu kann ein Eintrittsende 40 des ersten Kanalabschnitts 10 mit einer Einführschräge 41 oder Anfasung 41 ausgestattet sein, die im Beispiel baulich in die Anströmseite des Strömungsleitgitters 32 integriert ist.

Das Einsatzteil 8 kann zweckmäßig am Gehäuseteil 9 lösbar befestigt sein. Beispielsweise können hierzu entsprechende Befestigungsmittel vorgesehen sein. In Figur 2 deuten unterbrochene Linie entsprechende Verschraubungsstellen 42 an.

Wie sich insbesondere Fig. 2 entnehmen lässt, kann das Einsatzteil 8 zweckmäßig so ausgestaltet sein, dass es auch an seiner vom zugehörigen Kanalabschnitt 10 abgewandten Außenseite weitgehend hohl ausgestaltet ist, wodurch vergleichsweise wenig Kunststoff benötigt wird, um das Einsatzteil 8 herzustellen.

## Patentansprüche

1. Komponente einer Frischluftanlage einer Brennkraftmaschine, insbesondere eines Kraftfahrzeugs,
- mit einem Gehäuse (2),
- mit einer Luftparametermesseinrichtung (3), umfassend
- einen in Umfangsrichtung geschlossenen Kanal (4) zur Führung einer Frischluftströmung (5),
- eine Sensorik (7) zum Messen wenigstens eines Parameters der Frischluftströmung (5) im Kanal (4),
- wobei ein in Umfangsrichtung geschlossener Längsabschnitt (10) des Kanals (4) an einem Einsatzteil (8) ausgebildet ist,
- wobei die Sensorik (7) am Einsatzteil (8) zum Messen des wenigstens einen Parameters der Frischluftströmung (5) im Kanalabschnitt (10) des Einsatzteils (8) angeordnet ist,
**dadurch gekennzeichnet,**
- **dass**, das Einsatzteil (8) radial in ein Gehäuseteil (9) einsetzbar ist, das zumindest einen axial an dem Kanalabschnitt (10) des Einsatzteils anschließenden weiteren in Umfangsrichtung geschlossenen Längsabschnitt (11, 12) des Kanals (4) aufweist, und
- **dass** das Gehäuseteil (9) einen integralen Bestandteil des Gehäuses (2) bildet.

2. Komponente nach Anspruch 1,
**dadurch gekennzeichnet,**
**dass** die Komponente (1) ein Luftfilter (1) ist, das ein im Gehäuse (2) stromauf der Luftparametermesseinrichtung (3) angeordnetes Filterelement aufweist.

3. Komponente nach Anspruch 1 oder 2,
**dadurch gekennzeichnet,**
- **dass** das Gehäuseteil (9) eine Aufnahme (15) mit einer radialen Öffnung (16) aufweist,
- **dass** das Einsatzteil (8) durch die Öffnung (16) in die Aufnahme (15) eingesetzt ist.

4. Komponente nach Anspruch 3,
**dadurch gekennzeichnet,**
**dass** das Einsatzteil (8) die Öffnung (16) verschließt.

5. Komponente nach Anspruch 3 oder 4,
**dadurch gekennzeichnet,**
**dass** eine Kragendichtung (17) vorgesehen ist, die zwischen einem die Öffnung (16) einfassenden Kragen (18) des Gehäuseteils (9) und einem sich entlang des Kragens (18) erstreckenden Rand (19) des Einsatzteils (8) angeordnet ist.

6. Komponente nach einem der Ansprüche 3 bis 5,
**dadurch gekennzeichnet,**
**dass** eine Wanddichtung (20) vorgesehen ist, die zwischen einer Innenseite (21) einer die Aufnahme (15) radial begrenzenden Gehäusewand (22) und einer Außenseite (23) einer den Kanalabschnitt (10) des Einsatzteils (8) radial begrenzenden Bauteilwand (24) angeordnet ist.

7. Komponente nach Anspruch 5 oder 6,
**dadurch gekennzeichnet,**
- **dass** die jeweilige Dichtung (17, 20) an das Einsatzteil (8) angespritzt ist, und/oder
- **dass** die Dichtungen (17, 20) ineinander übergehen.

8. Komponente nach einem der Ansprüche 3 bis 7,
**dadurch gekennzeichnet,**
- **dass** die Aufnahme (15) einen U-förmigen Innenquerschnitt aufweist,
- **dass** das Einsatzteil (8) einen dazu komplementären Außenquerschnitt aufweist.

9. Komponente nach einem der Ansprüche 3 bis 8,
**dadurch gekennzeichnet,**
**dass** ein die Öffnung (16) einfassender Kragen (18) des Gehäuseteils (9) und ein sich entlang des Kragens (18) erstreckender Rand (19) des Einsatzteils (8) in einer Ebene (26) liegen.

10. Komponente nach einem der Ansprüche 1 bis 9,
**dadurch gekennzeichnet,**
- **dass** die Sensorik (7) an einem Sensorträger (27) angeordnet ist,
- **dass** das Einsatzteil (8) eine radiale Durchgangsöffnung (29) aufweist, durch die der Sensorträger (27) in den Kanalabschnitt (10) des Einsatzteils (8) hineinragt,
- **dass** der Sensorträger (27) die Durchgangsöffnung (29) dicht verschließt.

11. Komponente nach einem der Ansprüche 1 bis 10,
**dadurch gekennzeichnet,**
**dass** das Einsatzteil (8) ein Strömungsleitgitter (32) aufweist, das im Kanalabschnitt (10) des Einsatzteils (8) angeordnet ist.

12. Komponente nach einem der Ansprüche 1 bis 11,
**dadurch gekennzeichnet,**
- **dass** das Gehäuseteil (9) zwei axial zueinander fluchtende Längsabschnitte (11, 12) des Kanals (4) aufweist,
- **dass** der Kanalabschnitt (10) des Einsatzteils (8) axial zwischen den beiden Kanalabschnitten (11, 12) des Gehäuseteils (9) und dazu axial fluchtend angeordnet ist.

13. Komponente nach einem der Ansprüche 1 bis 12,
**dadurch gekennzeichnet,**
**dass** das Einsatzteil (8) lösbar am Gehäuseteil (9) befestigt ist.

14. Komponente nach einem der Ansprüche 1 bis 13,
**dadurch gekennzeichnet,**
**dass** die Luftparametermesseinrichtung (3) eine Luftmassenmesseinrichtung (3) ist.

15. Verwendung einer Luftparametermesseinrichtung (3) in einer Komponente einer Frischluftanlage einer Brennkraftmaschine, insbesondere eines Kraftfahrzeugs, zum Messen wenigstens eines Parameters einer Frischluftströmung (5) der Frischluftanlage, wobei die Komponente des Weiteren ein Gehäuse (2) aufweist, wobei die Luftparametermesseinrichtung (3) einen in Umfangsrichtung geschlossenen Kanal (4) zur Führung der Frischluftströmung (5) und eine Sensorik (7) zum Messen des wenigstens eines Parameters der Frischluftströmung (5) im Kanal (4) aufweist, wobei ein in Umfangsrichtung geschlossener Längsabschnitt (10) des Kanals (4) an einem Einsatzteil (8) ausgebildet ist, das radial in ein Gehäuseteil (9) einsetzbar ist, das zumindest einen axial an dem Kanalabschnitt (10) des Einsatzteils (8) anschließenden weiteren in Umfangsrichtung geschlossenen Längsabschnitt (11, 12) des Kanals (4) aufweist, und wobei die Sensorik (7) am Einsatzteil (8) zum Messen des wenigstens einen Parameters der Frischluftströmung (5) im Kanalabschnitt (10) des Einsatzteils (8) angeordnet ist, wobei das Gehäuseteil (9) einen integralen Bestandteil des Gehäuses (2) bildet.

## Claims

1. Component of a fresh air system of an internal combustion engine, in particular of a motor vehicle,
- having a housing (2),
- having an air parameter measuring device (3), comprising
- a channel (4) closed in the circumferential direction to guide a fresh air flow (5),
- a sensor (7) to measure at least one parameter of the fresh air flow (5) in the channel (4),
- wherein a longitudinal section (10) of the channel (4) closed in the circumferential direction is configured on an insert part (8),
- wherein the sensor (7) is arranged on an insert part (8) to measure the at least one parameter of the fresh air flow (5) in the channel section (10) of the insert part (8),
**characterised in that**
the insert part (8) is radially insertable into a housing part (9) which has at least one longitudinal section (11, 12) of the channel (4) axially adjoining the channel section (10) of the insert part closed further in the circumferential direction and **in that** the housing part (9) forms an integral part of the housing (2).

2. Component according to claim 1,
**characterised in that**
the component (1) is an air filter (1) which has a filter element arranged in the housing (2) upstream of the air parameter measuring device (3).

3. Component according to claim 1 or 2,
**characterised in that**
- the housing part (9) has a receiving portion (15) with a radial opening (16),
- the insert part (8) is inserted through the opening (16) into the receiving portion (15).

4. Component according to claim 3,
**characterised in that**
the insert part (8) seals the opening (16).

5. Component according to claim 3 or 4,
**characterised in that**
a collar sealing (17) is provided which is arranged between a collar (18) of the housing part (9) bordering the opening (16) and an edge (19) of the insert part (8) extending along the collar (18).

6. Component according to any one of claims 3 to 5,
**characterised in that**
a wall sealing (20) is provided which is arranged between an inner side (21) of a housing wall (22) radially delimiting the receiving portion (15) and an outer side (23) of a component wall (24) radially delimiting the channel section (10) of the insert part (8).

7. Component according to claim 5 to 6,
**characterised in that**
- the respective sealing (17, 20) is injection-moulded onto the insert part (8), and/or
- the sealings (17, 20) merge into each other.

8. Component according to any one of claims 3 to 7, **characterised in that**
- the receiving portion (15) has a U-shaped inner cross-section,
- the insert part (8) has an outer cross-section complementary thereto.

9. Component according to any one of claims 3 to 8,
**characterised in that**
a collar (18) of the housing part (9) bordering the opening (16) and an edge (19) of the insert part (8) extending along the collar (18) are located in one plane (26).

10. Component according to any one of claims 1 to 9,
**characterised in that**
- the sensor (7) is arranged on a sensor carrier (27),
- the insert part (8) has a radial through opening (29) through which the sensor carrier (27) protrudes into the channel section (10) of the insert part (8),
- the sensor carrier (27) tightly seals the through opening (29).

11. Component according to any one of claims 1 to 10,
**characterised in that**
the insert part (8) has a flow guide baffle (32) which is arranged in the channel section (10) of the insert part (8).

12. Component according to any one of claims 1 to 11,
**characterised in that**
- the housing part (9) has two longitudinal sections (11, 12) of the channel (4) aligned axially to each other,
- the channel section (10) of the insert part (8) is arranged axially between the two channel sections (11, 12) of the housing part (9) and axially aligned thereto.

13. Component according to any one of claims 1 to 12,
**characterised in that**
the insert part (8) is detachably fastened to the housing part (9).

14. Component according to any one of claims 1 to 13,
**characterised in that**
the air parameter measuring device (3) is an air flow measuring device (3).

15. Use of an air parameter measuring device (3) in a component of a fresh air system of an internal combustion engine, in particular of a motor vehicle to measure at least one parameter of a fresh air flow (5) of the fresh air system, wherein the component also has a housing (2),
wherein the air parameter measuring device (3) has a channel (4) closed in the circumferential direction to guide the fresh air flow (5) and a sensor (7) to measure the at least one parameter of the fresh air flow (5) in the channel (4), wherein a longitudinal section (10) of the channel (4) closed in the circumferential direction is configured on an insert part (8) which is radially insertable into a housing part (9), which has at least one longitudinal section (11, 12) of the channel (4) axially adjoining the channel section (10) of the insert part (8) closed further in the circumferential direction and wherein the sensor (7) is arranged on the insert part (8) to measure the at least one parameter of the fresh air flow (5) in the channel section (10) of the insert part (8), wherein the housing part (9) forms an integral part of the housing (2).

## Revendications

1. Composant d'une installation d'alimentation en air frais d'un moteur à combustion interne, en particulier d'un véhicule automobile,
- avec un boîtier (2),
- avec un dispositif de mesure de paramètres d'air (3), comprenant
- un canal (4) fermé dans la direction périphérique servant à guider un écoulement d'air frais (5),
- un système de détection (7) servant à mesurer au moins un paramètre de l'écoulement d'air frais (5) dans le canal (4),
- dans lequel une portion longitudinale (10) fermée dans la direction périphérique du canal (4) est réalisée au niveau d'une partie d'insertion (8),
- dans lequel le système de détection (7) est disposé dans la portion de canal (10) de la partie d'insertion (8) au niveau de la partie d'insertion (8) servant à mesurer l'au moins un paramètre de l'écoulement d'air frais (5),
**caractérisé en ce**
- **que** la partie d'insertion (8) peut être insérée de manière radiale dans une partie de boîtier (9), qui présente au moins une autre portion longitudinale (11, 12) fermée dans la direction périphérique, se raccordant de manière axiale à la portion de canal (10) de la partie d'insertion, du canal (4), et
- **que** la partie de boîtier (9) forme une partie faisant partie intégrante du boîtier (2).

2. Composant selon la revendication 1,
**caractérisé en ce**
**que** le composant (1) est un filtre à air (1), qui présente un élément filtrant disposé dans le boîtier (2) en amont du dispositif de mesure de paramètres d'air (3).

3. Composant selon la revendication 1 ou 2,
**caractérisé en ce**
- **que** la partie de boîtier (9) présente un logement (15) avec une ouverture (16) radiale,
- **que** la partie d'insertion (8) est insérée dans le logement (15) par l'ouverture (16).

4. Composant selon la revendication 3,
**caractérisé en ce**
**que** la partie d'insertion (8) ferme l'ouverture (16).

5. Composant selon la revendication 3 ou 4,
**caractérisé en ce**
**qu'**un joint d'étanchéité à collet (17) est prévu, lequel est disposé entre un collet (18), encadrant l'ouverture (16), de la partie de boîtier (9) et un bord (19), s'étendant le long du collet (18), de la partie d'insertion (8).

6. Composant selon l'une quelconque des revendications 3 à 5,
**caractérisé en ce**
**qu'**un joint d'étanchéité de paroi (20) est prévu, lequel est disposé entre un côté intérieur (21) d'une paroi de boîtier (22) délimitant de manière radiale le logement (15) et un côté extérieur (23) d'une paroi de composant (24) délimitant de manière radiale la portion de canal (10) de la partie d'insertion (8).

7. Composant selon la revendication 5 ou 6,
**caractérisé en ce**
- **que** le joint d'étanchéité (17, 20) respectif est injecté au niveau de la partie d'insertion (8), et/ou
- **que** les joints d'étanchéité (17, 20) se confondent les uns les autres.

8. Composant selon l'une quelconque des revendications 3 à 7,
**caractérisé en ce**
- **que** le logement (15) présente une section transversale intérieure en forme de U,
- **que** la partie d'insertion (8) présente une section transversale extérieure complémentaire par rapport à celle-ci.

9. Composant selon l'une quelconque des revendications 3 à 8,
**caractérisé en ce**
**qu'**un collet (18), encadrant l'ouverture (16), de la partie de boîtier (9) et un bord (19), s'étendant le long du collet (18), de la partie d'insertion (8) se trouvent dans un plan (26).

10. Composant selon l'une quelconque des revendications 1 à 9,
**caractérisé en ce**
- **que** le système de détection (7) est disposé au niveau d'un support de capteur (27),
- **que** la partie d'insertion (8) présente une ouverture de passage (29) radiale, par laquelle le support de capteur (27) dépasse dans la portion de canal (10) de la partie d'insertion (8),
- **que** le support de capteur (27) ferme de manière étanche l'ouverture de passage (29).

11. Composant selon l'une quelconque des revendications 1 à 10,
**caractérisé en ce**
**que** la partie d'insertion (8) présente une grille directrice d'écoulement (32), qui est disposée dans la portion de canal (10) de la partie d'insertion (8).

12. Composant selon l'une quelconque des revendications 1 à 11,
**caractérisé en ce**
- **que** la partie de boîtier (9) présente deux portions longitudinales (11, 12), en alignement l'une par rapport à l'autre de manière axiale, du canal (4),
- **que** la portion de canal (10) de la partie d'insertion (8) est disposée de manière axiale entre les deux portions de canal (11, 12) de la partie de boîtier (9) et en alignement de manière axiale par rapport à celles-ci.

13. Composant selon l'une quelconque des revendications 1 à 12,
**caractérisé en ce**
**que** la partie d'insertion (8) est fixée de manière amovible à la partie de boîtier (9).

14. Composant selon l'une quelconque des revendications 1 à 13,
**caractérisé en ce**
**que** le dispositif de mesure de paramètres d'air (3) est un dispositif de mesure de masse d'air (3).

15. Utilisation d'un dispositif de mesure de paramètres d'air (3) dans un composant d'une installation d'alimentation en air frais d'un moteur à combustion interne, en particulier d'un véhicule automobile, servant à mesurer au moins un paramètre d'un écoulement d'air frais (5) de l'installation d'alimentation en air frais, dans laquelle le composant présente par ailleurs un boîtier (2), dans laquelle le dispositif de mesure de paramètres d'air (3) présente un canal (4) fermé dans la direction périphérique servant à guider l'écoulement d'air frais (5) et un système de détection (7) servant à mesurer l'au moins un paramètre de l'écoulement d'air frais (5) dans le canal (4), dans laquelle une portion longitudinale (10), fermée dans la direction périphérique, du canal (4) est réalisée au niveau d'une partie d'insertion (8), qui peut être insérée de manière radiale dans une partie de boîtier (9), qui présente au moins une autre portion longitudinale (11, 12) fermée dans la direction périphérique, se raccordant de manière axiale à la portion de canal (10) de la partie d'insertion (8), du canal (4), et dans laquelle le système de détection (7) est disposé au niveau de la partie d'insertion (8) servant à mesurer l'au moins un paramètre de l'écoulement d'air frais (5) dans la portion de canal (10) de la partie d'insertion (8), dans laquelle la partie de boîtier (9) forme une partie faisant partie intégrante du boîtier (2).
